# EUROPÄISCHE PATENTSCHRIFT

(11) **EP 3 379 127 B1**
(45) Veröffentlichungstag und Bekanntmachung des Hinweises auf die Patenterteilung: **11.05.2022**
(21) Anmeldenummer: 18162009.7
(22) Anmeldetag: 15.03.2018
(51) Int. Cl.: F16L 37/00, F16L 37/113

(54) **MUFFENVERBINDUNG**
SOCKET JOINT
RACCORD PAR MANCHON

(30) Priorität: 21.03.2017 DE 102017106041
(43) Veröffentlichungstag der Anmeldung: 26.09.2018
(73) Patentinhaber: Düker GmbH, 97753 Karlstadt (DE)
(72) Erfinder: Jäger, Oliver, 89520 Heidenheim a.d. Brenz (DE); Schäfer, Thomas, 63768 Hösbach (DE); Reuter, Niklas, 63773 Goldbach (DE)
(74) Vertreter: Ullrich & Naumann PartG mbB

(56) Entgegenhaltungen:
- EP-A1- 2 369 215
- WO-A1-2015/159228
- DE-U1- 20 207 642
- DE-U1- 20 313 792
- FR-A- 1 372 566
- US-A1- 2008 258 463

## Beschreibung

Die Erfindung betrifft eine Muffenverbindung zwischen einem Muffenkörper und einem Spitzende eines Rohrstücks, die insbesondere jeweils aus Guss, insbesondere Metallguss, hergestellt sind.

Derartige Muffenverbindungen sind aus dem Stand der Technik bekannt, beispielsweise aus der WO 2015/159228 A1, DE 20313792 U1 und US 2008/0258463 A1.

Bei diesen besteht jedoch das Problem, die Muffenverbindung leicht montierbar und demontierbar zu gestalten.

Diese Aufgabe wird bei einer Muffenverbindung zwischen einem Muffenkörper und einem Spitzende eines Rohrstücks erfindungsgemäß durch die Merkmalskombination des Anspruchs 1 gelöst.

Der Vorteil der erfindungsgemäßen Lösung ist darin zu sehen, dass damit die Möglichkeit besteht, das Spitzende in einfacher Weise gegen ein Herausbewegen aus dem Muffenkörper mit dem Bajonettring zu sichern, andererseits aber auch in einfacher Weise den Bajonettring zu lösen, um somit auch die Muffenverbindung lösen zu können.

Außerdem ist bei der erfindungsgemäßen Lösung das Rohrstück zugfest gehalten und insbesondere besteht die Möglichkeit das Rohrstück stufenlos gedreht einzusetzen und beispielsweise auch zu drehen.

Besonders günstig ist es hierbei, wenn der Bajonettring in einer Lösestellung mit seinen Bajonettkörpern in die Bajonettaufnahme des Muffenkörpers einsetzbar ist und durch Drehen in der Bajonettaufnahme um eine Mittelachse des Muffenkörpers in der Bajonettaufnahme in eine Haltestellung bewegbar ist, in welcher der Bajonettring mit seinen Bajonettkörpern gegen eine Bewegung parallel zur Mittelachse der Bajonettaufnahme und insbesondere auch des Muffenkörpers festgelegt ist.

Dadurch lässt sich in einfacher Weise die Verbindung zwischen dem Bajonettring mit den Bajonettkörpern und der Bajonettaufnahme in dem Muffenkörper herstellen.

Hinsichtlich der relativen Anordnung der Bajonettaufnahme und des Dichtsitzes oder des mindestens einen Dichtrings wurden bislang keine näheren Angaben gemacht.

So ist vorzugsweise vorgesehen, dass die Bajonettaufnahme des Muffenkörpers zwischen einer Einstecköffnung des Muffenkörpers und dem Dichtsitz oder der mindestens einen Dichtring am Muffenkörper angeordnet ist, so dass ausgehend von der Einstecköffnung der Dichtsitz oder der mindestens eine Dichtring tiefer in dem Muffenkörper sitzen als die Bajonettaufnahme.

Ferner ist vorzugsweise vorgesehen, dass der Dichtsitz oder der mindestens eine Dichtring zwischen der Bajonettaufnahme und einer von einem den Muffenkörper tragenden Basiselement in dem Muffenkörper führenden Verbindungsöffnung liegt.

Dabei strömt durch die Verbindungsöffnung das durch die Muffenverbindung zu führende Medium entweder von dem Basiselement über die Verbindungsöffnung in den Muffenkörper und in diesem in das Spitzende des Rohrstücks hinein oder das zuführende Medium tritt aus dem Spitzende des Rohrstücks in den Muffenkörper aus und tritt von dem Muffenkörper über die Verbindungsöffnung in das Basiselement ein.

Hinsichtlich der Anordnung des Dichtsitzes und des Dichtrings relativ zu einer Mittelachse des Muffenkörpers wurden bislang keine näheren Angaben gemacht.

So sieht eine besonders vorteilhafte Lösung vor, dass der Dichtsitz und der Dichtring koaxial zu einer Mittelachse des Muffenkörpers angeordnet sind, so dass dadurch die Möglichkeit besteht, das Spitzende relativ zum Muffenkörper um die Mittelachse zu drehen.

Im einfachsten Fall ist der Dichtsitz als zur Mittelachse des Muffenkörpers zylindrischen Fläche ausgebildet, an welchem der mindestens eine Dichtring anliegt und durch radiale Pressung eine Abdichtung zwischen dem Dichtsitz und dem Spitzende bewirkt.

Eine derartige Ausgestaltung des Dichtsitzes hat den großen Vorteil, dass dadurch die Lage des Spitzendes relativ zum Muffenkörper hinsichtlich der Abdichtwirkung unempfindlich ist gegen geringfügige Verschiebungen in Richtung der Mittelachse des Muffenkörpers.

Ferner wurden hinsichtlich der Zuordnung des Dichtsitzes und des Dichtrings zu dem Muffenkörper und dem Spitzende keine näheren Angaben gemacht.

Als besonders günstig hat sich eine Lösung erwiesen, bei welcher der Dichtsitz in dem Muffenkörper und der mindestens eine Dichtring an dem Spitzende angeordnet sind.

Dabei ist insbesondere der Dichtring in einer Dichtringaufnahme an dem Spitzende gehalten und somit relativ zu diesem fixiert.

Hinsichtlich der Anordnung des Bajonettrings am Spitzende relativ zu dem Dichtsitz oder dem mindestens einen Dichtring wurden bislang keine näheren Angaben gemacht.

So sieht eine vorteilhafte Lösung vor, dass der Bajonettring auf einer einer Stirnfläche des Spitzendes abgewandten Seite des Dichtsitzes oder des mindestens einen Dichtrings am Spitzende angeordnet ist.

Diese Lösung hat den Vorteil, dass dadurch die Fixierung des Spitzendes relativ zum Muffenkörper außerhalb des durch den Dichtsitz oder den mindestens einen Dichtring abgedichteten Bereichs zur Führung des Mediums durch die Muffenverbindung angeordnet ist.

Zur Fixierung des Spitzendes relativ zum Bajonettring, insbesondere dahingehend, dass das Spitzende sich an dem Bajonettring abstützen kann, ist vorgesehen, dass sich das Spitzende mit mindestens einem Stützkörper an dem Bajonettring abstützt.

Vorzugsweise ist somit der Bajonettring auf einer dem Dichtsitz oder dem mindestens einen Dichtring abgewandten Seite des Stützkörpers angeordnet, so dass der Stützkörper dadurch in einfacher Weise durch das Abstützen am Bajonettring eine Sicherung des Spitzendes gegen ein Herausbewegen aus dem Muffenkörper bewirken kann.

Eine besonders vorteilhafte Ausführungsform sieht vor, dass das Spitzende als Stützkörper einen Haltering trägt, mit dem sich dieser an dem Bajonettring abstützt.

Der Haltering kann dabei in unterschiedlichster Art und Weise an dem Spitzende fixiert sein.

Beispielsweise wäre es denkbar, dass der Haltering einstückig oder stoffschlüssig mit dem Spitzende verbunden ist.

Eine besonders günstige Lösung sieht vor, dass der Haltering formschlüssig in einer Halteaufnahme an dem Spitzende gehalten ist.

Um den Haltering in der Halteaufnahme montieren zu können, wäre es beispielsweise denkbar, den Haltering mit Rastelementen zu versehen, welche bei einem Aufschieben auf das Spitzende in die Halteaufnahme einrasten.

Eine andere vorteilhafte Lösung sieht vor, dass der Haltering an einer Umfangsstelle eine Formschlussverbindung aufweist, die zum radialen Aufweiten des Halterings lösbar ist.

Somit lässt sich vorzugsweise der aufgeweitete Haltering in die Halteaufnahme des Spitzendes einsetzen und nach Herstellen der Formschlussverbindung in der Halteaufnahme gegen eine Bewegung in Richtung der Mittelachse relativ zum Spitzende fixieren.

Hinsichtlich der genauen Anordnung des Bajonettrings am Spitzende wurden ebenfalls keine detaillierten Angaben gemacht.

So ist vorzugsweise vorgesehen, dass der Bajonettring mit einem Ringkörper das Spitzende umschließt und damit in einfacher Weise an dem Spitzende angeordnet sein kann.

Besonders vorteilhaft ist es dabei, wenn der Ringkörper relativ zu dem Spitzende drehbar ist.

Ferner ist der Bajonettring so ausgebildet, dass der Ringkörper des Bajonettrings einen Flanschkörper des Bajonettrings trägt, mit welchem vorzugsweise der Bajonettring drehbar ist.

Im einfachsten Fall sind dabei der Ringkörper und der Flanschkörper einstückig miteinander verbunden.

Ferner ist hinsichtlich der Anordnung des Flanschkörpers des Bajonettrings vorzugsweise vorgesehen, dass der Flanschkörper in Richtung der Mittelachse außerhalb des Muffenkörpers angeordnet ist, so dass in einfacher Weise eine Einwirkung auf den Flanschkörper erfolgen kann.

Vorzugsweise ist dabei der Flanschkörper so angeordnet, dass er die Einstecköffnung des Muffenkörpers überdeckt.

Noch vorteilhafter ist es, wenn der Flanschkörper eine die Einstecköffnung umschließende Stirnseite des Muffenkörpers übergreifend angeordnet ist.

Um zusätzlich noch den Bajonettring in der Haltestellung gegen eine Verdrehung relativ zu dem Muffenkörper zu sichern, ist vorgesehen, dass der Bajonettring in dem Muffenkörper durch einen Blockierkörper drehfest blockierbar oder blockiert ist.

Dabei ist der Blockierkörper zweckmäßigerweise am Bajonettring parallel zur Mittelachse bewegbar geführt, um diesen somit zwischen einer Blockierstellung und einer Lösestellung bewegen zu können.

Um eine sichere Fixierung des Bajonettrings relativ zum Muffenkörper zu erreichen ist vorgesehen, dass der Blockierkörper zur drehfesten Festlegung des Bajonettrings in eine Aussparung im Muffenkörper eingreift.

Eine derartige Aussparung im Muffenkörper könnte eine ausschließlich für die Aufnahme des Blockierkörpers vorgesehene Aussparung sein.

Eine besonders einfache Lösung sieht jedoch vor, dass eine derartige Aussparung eine in der Bajonettaufnahme vorgesehene Einführaufnahme für die Bajonettkörper ist.

Weitere Merkmale und Vorteile der Erfindung sind Gegenstand der nachfolgenden Beschreibung sowie der zeichnerischen Darstellung eines Ausführungsbeispiels.

In der Zeichnung zeigen:
- Fig. 1: einen Längsschnitt durch eine erfindungsgemäße Muffenverbindung;
- Fig. 2: einen der Fig. 1 entsprechenden Längsschnitt durch einen Muffenkörper der Muffenverbindung;

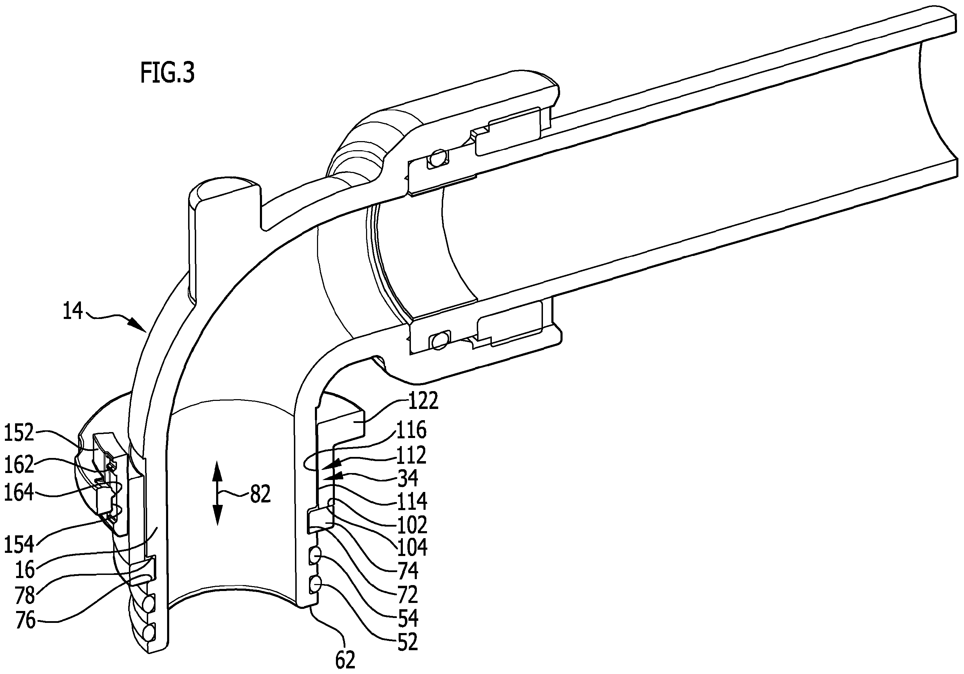

- Fig. 3: einen dem Längsschnitt gemäß Fig. 1 entsprechenden Längsschnitt durch ein Rohrstück der erfindungsgemäßen Muffenverbindung mit einem in den Muffenkörper einsteckbaren Spitzende;
- Fig. 4: eine Draufsicht auf einen Haltering;
- Fig. 5: eine perspektivische Darstellung eines Bajonettrings;
- Fig. 6: einen Querschnitt durch eine Bajonettaufnahme des Muffenkörpers und einen in diese Bajonettaufnahme eingesetzten Bajonettring;
- Fig. 7: eine Draufsicht auf den in der Bajonettaufnahme sitzenden Bajonettring in Richtung des Pfeils A in Fig. 6 und
- Fig. 8: einen Schnitt längs Linie 8-8 in Fig. 6.

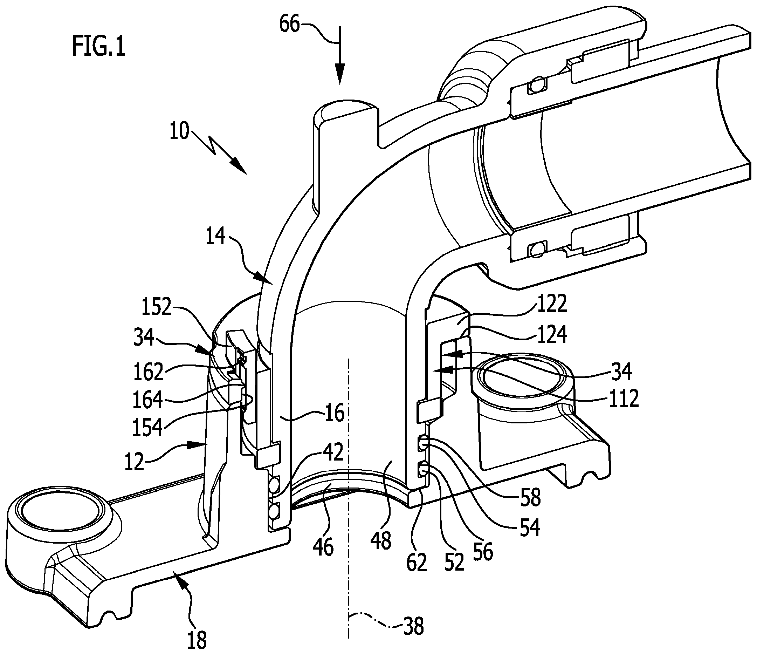

Ein in Fig. 1 dargestelltes Ausführungsbeispiel einer erfindungsgemäßen Muffenverbindung, umfasst einen Muffenkörper 12, in welchen ein Rohrstück 14 mit einem Spitzende 16 eingesteckt ist.

Dabei ist beispielsweise der Muffenkörper 12 an ein Basiselement 18 angeformt, wobei das Basiselement 18 in unterschiedlichster Art und Weise ausgebildet sein kann.

Im einfachsten Fall kann das Basiselement 18 ein Rohrstück sein. Das Basiselement 18 kann aber auch ein Teil eines Armaturengehäuses oder ein Teil eines Formstücks sein.

Im dargestellten Fall ist das Basiselement 18 beispielsweise ein Teil eines Armaturengehäuses insbesondere ein Teil eines Deckels eines Armaturengehäuses.

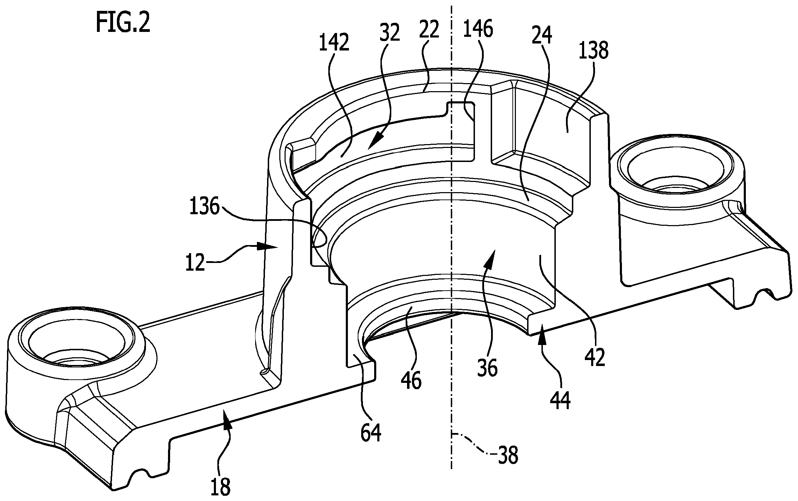

Der Muffenkörper 12 umfasst, wie in Fig. 2 im Einzelnen dargestellt, eine Einstecköffnung 22, durch welche das Spitzende 16 des Rohrstücks 14 in einen von dem Muffenkörper 12 umschlossenen Innenraum 24 einsteckbar ist.

Vorzugsweise schließt sich an die Einstecköffnung 22 eine als Ganzes mit 32 bezeichnete Bajonettaufnahme an, welche zur Aufnahme eines in Fig. 1 dargestellten Bajonettrings 34 dient, wie nachfolgend im Einzelnen noch beschrieben.

Auf einer der Einstecköffnung 22 gegenüberliegenden Seite der Bajonettaufnahme 32 ist ein Dichtsitz 36 vorgesehen, der vorzugsweise eine zylindrisch zu einer Mittelachse 38 des Muffenkörpers 12 verlaufende Dichtfläche 42 aufweist, die sich zwischen der Bajonettaufnahme 32 und einem Anschlagkörper 44 erstreckt, der beispielsweise eine zu dem Basiselement 18 führende Verbindungsöffnung 46 umschließt, über welche ein Medium aus dem Basiselement 18 in ein inneres 48 des Rohrstücks 14 eintreten kann oder umgekehrt.

Eine Abdichtung zwischen dem Spitzende 16 des Rohrstücks 14 und dem Dichtsitz 36 mit der Dichtfläche 42 erfolgt vorzugsweise, wie in Fig. 1 dargestellt, durch Ringdichtelemente 52 und 54, welche in diese aufnehmende Aufnahmenuten 56 und 58 an einer Außenumfangseite des Spitzendes 16 eingelegt sind und bei in den Muffenkörper 12 eingreifendem Spitzende 16 radial soweit in Richtung der Dichtfläche 42 überstehen, dass die Dichtringe 52 und 54 einerseits dicht abschließend in den Aufnahmenuten 56 und 58 sitzen und andererseits dicht abschließend, insbesondere mit Pressung in radialer Richtung zur Mittelachse 38, an der Dichtfläche 42 des Dichtsitzes 36 des Muffenkörpers 12 anliegen.

Vorzugsweise liegt eine Stirnfläche 62 des Spitzendes 16 des Rohrstücks 14 im vollständig in den Muffenkörper 12 eingesteckten Zustand des Spitzendes 16 an einer von dem Anschlagkörper 44 gebildeten Flanschfläche 64 an, so dass dadurch die Einstecktiefe des Spitzendes in Einsteckrichtung 66 in dem Muffenkörper 12 begrenzt ist.

Die Sicherung des Spitzendes 16 gegen ein Herausbewegen aus dem Muffenkörper 12 entgegengesetzt der Einsteckrichtung 66 erfolgt durch das Zusammenwirken des Bajonettrings 34 mit der Bajonettaufnahme 32 des Muffenkörpers 12.

Zur Abstützung des Spitzendes 16 des Rohrstücks 14 an dem Bajonettring 34 ist auf einer der Stirnfläche 62 des Spitzendes 16 abgewandten Seite der Aufnahmenuten 56 und 58 in dem Außenumfang des Spitzendes 16 des Rohrstücks 14 eine Halteaufnahme 72, beispielsweise ausgebildet als Haltenut, vorgesehen, in welcher ein Haltering 74 zwischen zwei Halteflächen 76, 78 gegen eine Verschiebung in Richtung einer Mittelachse 82 des Spitzendes 16 gesichert aufgenommen ist.

Dadurch ist der Haltering 74 in Richtung der Mittelachse 82 unverschiebbar an dem Spitzende 16 gehalten.

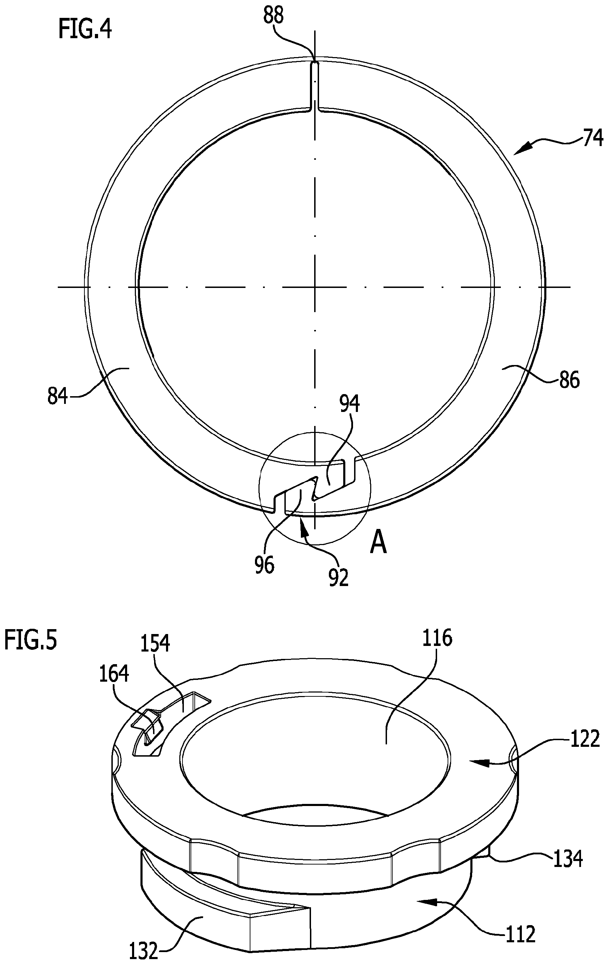

Der Haltering 74 umfasst, wie in Fig. 4 dargestellt, zwei Ringhälften 84 und 86, die einerseits durch ein Gelenk 88, beispielsweise ein Scharnier, insbesondere ein Filmscharnier, verbunden sind und andererseits, dem Gelenk 88 gegenüberliegend durch eine Rastverbindung 92 miteinander verbunden sind.

Beispielsweise umfasst die Rastverbindung 92 aufgrund der Materialelastizität der Ringhälften 84 und 86 radial zueinander bewegbare und ineinander greifende Rasthaken 94, 96 mit denen eine formschlüssige Verbindung zwischen den Ringhälften 84 und 86 im Bereich der Rastverbindung 92 herstellbar ist.

Somit besteht die Möglichkeit, zur Montage des Halterings 74 in der Halteaufnahme 72 die Rastverbindung 92 durch radiale Bewegung der Rasthaken 94 und 96 relativ zueinander zu öffnen, und den Haltering 74 aufgrund des Gelenks 88 soweit aufzuklappen, dass die beiden Ringhälften 84 und 86 ausgehend von der Stirnfläche 62 des Spitzendes 16 über die beiden Dichtringe 52 und 54 hinweg bis zur Halteaufnahme 72 bewegbar sind und dann durch ein aufeinander zubewegen der Ringhälften 84 und 86 in die Halteaufnahme 72 einsetzbar sind, wobei bei in der Halteaufnahme 72 sitzenden Ringhälften 84 und 86 des Halterings 74 die Rasthaken 94 und 96 miteinander zum Eingriff gebracht werden können und somit der um das Spitzende 16 geschlossen umlaufende Haltering 74 entsteht, der in der Halteaufnahme 72 gegen Bewegungen in Richtung der Mittelachse 82 des Spitzendes 16 gesichert gehalten ist.

Mittels des Halterings 74 stützt sich das Spitzende 16 an dem Bajonettring 34 ab, welcher das Spitzende 16 auf einer den Dichtringen 52 und 54 abgewandten Seite des Halterings 74 umschließt, so dass der Haltering 74 mit einer Halteringfläche 102, die den Dichtringen 52 und 54 abgewandt ist, sich an einer Stützringfläche 104 des Bajonettrings 34 abstützen kann.

Der mit der Bajonettaufnahme 32 in Eingriff bringbare Bajonettring 34 umfasst, wie in den Fig. 5, 6, 7 und 8 dargestellt, einen Ringkörper 112, welcher das Spitzende 16 auf einer Außenumfangsseite 114 umschließt und mit einer Innenfläche 116 an der Außenumfangsseite 114 geführt ist.

Der Ringkörper 112 trägt dabei auf einer Seite die Stützringfläche 104, an welcher sich der Haltering 74 mit der Halteringfläche 102 abstützt.

Ferner ist der Ringkörper 112 auf einer der Stützringfläche 104 abgewandten Seite mit einem Flanschkörper 122 versehen, welcher radial zur Mittelachse 82 des Spitzendes 16 über den Ringkörper 112 nach außen übersteht und beispielsweise im in die Bajonettaufnahme 32 eingesetzten Zustandes des Bajonettrings 34, wie in Fig. 1 dargestellt, den Muffenkörper 12 an seiner dem Basiselement 18 abgewandten Stirnseite 124 übergreift.

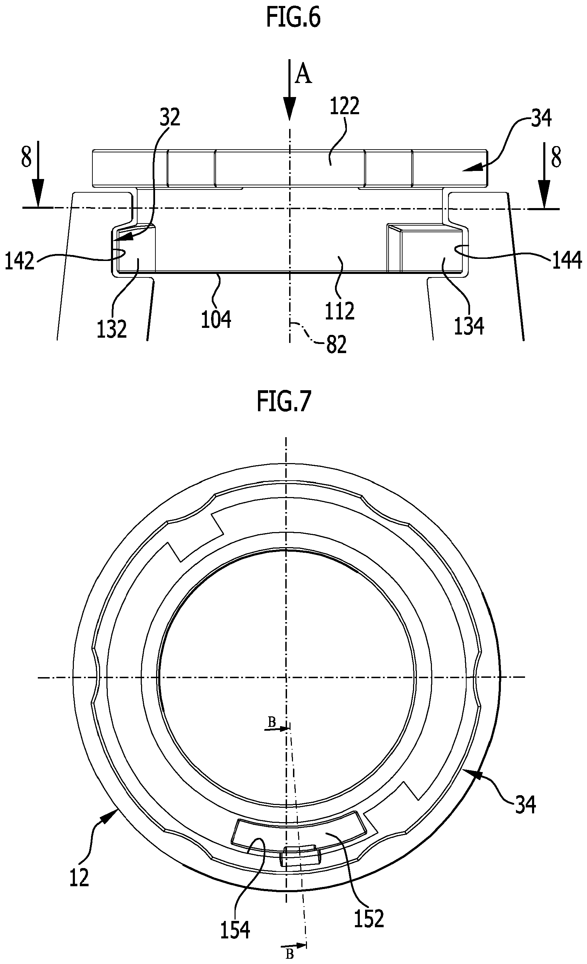

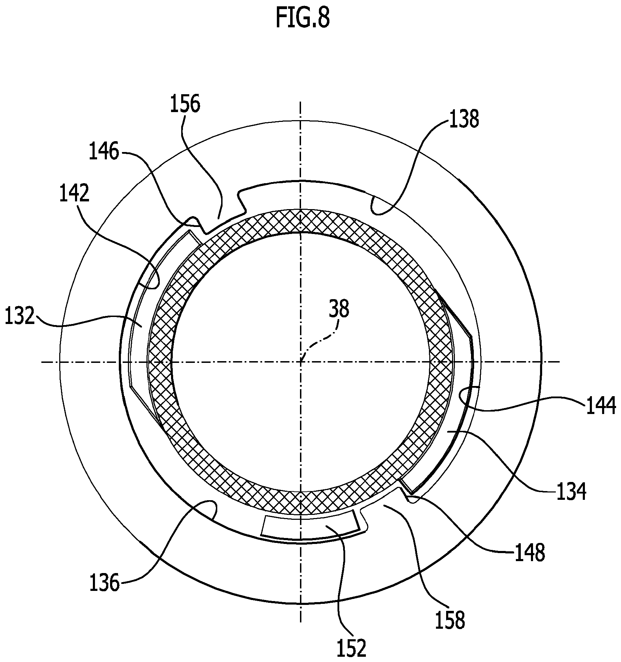

Wie in Fig. 6 und Fig. 8 dargestellt, sitzen an dem Ringkörper 112 in Richtung parallel zur Mittelachse 82 im Abstand von dem Ringflansch 122 angeordnete Bajonettkörper 132 und 134, die in Richtung parallel zur Mittelachse 38 in zur Einstecköffnung 22 hin offene und somit von Seiten der Einstecköffnung 22 zugängliche Einführaufnahmen 136 und 138 der Bajonettaufnahme 32 einsetzbar sind und ausgehend von diesen Einführaufnahmen 136 und 138 durch Drehen um die Mittelachse 38 in Halteaufnahmen 142 und 144 hinein bewegbar sind, in denen die Bajonettkörper 132 und 134 gegen eine Bewegung in Richtung der Mittelachse 38 fixiert sind und somit auch den Bajonettring 34 gegen eine Bewegung in Richtung der Mittelachse 38 in der Bajonettaufnahme 32 fixieren.

Zur Festlegung einer Fixierstellung des Bajonettrings 34 in der Bajonettaufnahme 32 sind die Halteaufnahmen, wie in Fig. 2 dargestellt, mit Endflächen 146 und 148 versehen, gegen welche die Bajonettkörper 132 und 134 in der Fixierstellung anlegbar sind.

Zur Sicherung des Bajonettrings 34 in der Haltestellung gegen eine Drehung in Richtung einer Lösestellung, in welcher die Bajonettkörper 132 und 134 in den Einführaufnahmen 136 und 138 liegen würden und dadurch entgegengesetzt zur Einsteckrichtung 66 parallel zur Mittelachse 38 aus der Bajonettaufnahme 32 herausbewegt werden könnten, ist der Flanschkörper 122 des Bajonettrings 32 noch mit einem Sicherungsschieber 152 versehen, welcher in einer den Flanschkörper 122 durchsetzenden Schieberführung 154 in Richtung parallel zur Mittelachse 38 relativ zum Flanschkörper 122 verschiebbar geführt ist, so dass der Sicherungsschieber 152 in der Fixierstellung des Bajonettrings 34, dargestellt in den Fig. 7 und 8, in eine der Einführaufnahmen 136, 138, beispielsweise die Einführaufnahme 136, einsteckbar ist und dadurch eine Drehbewegung des Bajonettrings 34 dann blockieren kann, wenn der Sicherungsschieber 152 nahe eines die Endflächen 146 und 148 bildenden und andererseits die Einführaufnahmen 136 und 138 begrenzenden Vorsprungs 156 beziehungsweise 158 der Bajonettaufnahme 32, im dargestellten Fall am Vorsprung 158, anliegt und damit eine Drehung des Bajonettrings 34 dergestalt, dass die Bajonettkörper 132 und 134 in die Einführaufnahmen 136, 138 bewegt werden können, verhindert.

Zur Sicherung des in die Einführaufnahmen 136 eingreifenden Sicherungsschiebers 152 in dieser Position ist der Sicherungsschieber 152 mit einem Rastelement 162 versehen, welches mit einem der Schieberführung zugeordneten Rastelement 164 dann zusammenwirkt, wenn der Sicherungsschieber 152 in seiner die Drehbewegung des Bajonettrings 34 blockierenden, in die Einführaufnahme 136 eingeschobenen Stellung steht.

Zur Herstellung der erfindungsgemäßen Muffenverbindung wird somit das Spitzende 16 des Rohrstücks 14 so hergestellt, dass dieses bereits die Aufnahmenuten 56 und 58 für die Dichtringe 52 und 54 sowie die Halteaufnahme 72 für den Haltering 74 aufweist.

Auf ein derart vorbereitetes Spitzende 16 wird ausgehend von der Stirnfläche 62 desselben zunächst der Bajonettring 34 parallel zur Mittelachse 82 soweit aufgeschoben, bis die Innenfläche 116 des Ringkörpers 112 des Bajonettrings 34 die Außenumfangsseite 114 des Spitzendes 116 umgreift und somit an dieser drehbar geführt ist.

Nachfolgend erfolgt ein Einsetzen des Halterings 74 in die Halteaufnahme 62 des Spitzendes 16, wobei hierbei bereits der Haltering 74 mit seiner Halteringfläche 102 an der Stützringfläche 104 des Ringkörpers 112 anliegt.

Vor der Montage oder nach der Montage des Halterings 74 erfolgt eine Montage der Dichtringe 52 und 54 durch Einsetzen derselben in die Aufnahmenuten 56 und 58.

Der Sicherungsschieber 152 wird außerdem so weit relativ zum Flanschkörper 122 verschoben, dass dieser nicht über den Flanschkörper 122 des Bajonettrings 34 in Richtung des Muffenkörpers 12 übersteht, sondern lediglich durch die Schieberführung 154 geführt ist, ohne über den Flanschkörper 122 in Richtung des Muffenkörpers 12 und der Bajonettaufnahme 32 überzustehen.

In dieser Position des Sicherungsschiebers 152 lässt sich der Bajonettring 34 relativ zur Bajonettaufnahme 32 so verdrehen, dass ausgehend von der Einstecköffnung 22 des Muffenkörpers 12 die Bajonettkörper 132 und 134 in die Einführaufnahmen 136 und 138 eintreten können und zwar so weit, bis - wie in Fig. 1 dargestellt, das Einstecken des Spitzendes 16 in der Einsteckrichtung 66 durch das Gegenlaufen der Stirnfläche 62 des Spitzendes 16 gegen die Flanschfläche 64 begrenzt wird.

In dieser, mit dem Spitzende 16 vollständig in den Muffenkörper 12 eingesteckten Stellung des Rohrstücks 14 lässt sich der Bajonettring 34 relativ zum Spitzende 16 so verdrehen, dass die Bajonettkörper 132 und 134 in die Halteaufnahmen 142 und 144 eintreten können und in diesen gegen eine Bewegung parallel zur Mittelachse 38 gesichert werden.

Sobald die Bajonettkörper 132 und 134 in den Halteaufnahmen 142 und 144 an den Endflächen 146 und 148 anliegen, steht auch der Sicherungskörper 152 in einer Stellung, in welcher dieser relativ zur Schieberführung 154 im Flanschkörper 122 so weit verschoben werden kann, dass dieser beispielsweise in die Einführaufnahme 136 eindringt und in diesem Fall an dem Vorsprung 158 anliegt und somit verhindert, dass sich der Bajonettring 34 von der Fixierstellung in die Lösestellung drehen lässt.

Damit ist das Spitzende 16 des Rohrstücks 14 in dem Muffenkörper 12 gegen ein Herausbewegen aus dem Muffenkörper 12 gesichert.

Nach wie vor lässt sich jedoch das Rohrstück 14 relativ zum Muffenkörper 12 verdrehen, wobei die Dichtringe 52 und 54 nach wie vor dichtend an der Dichtfläche 42 des Dichtsitzes 36 anliegen und auch bei einer Drehbewegung eine mediendichte Verbindung zwischen dem Spitzende 16 und dem Muffenkörper 12 herstellen.

## Patentansprüche

1. Muffenverbindung zwischen einem Muffenkörper (12) und einem Spitzende (16) eines Rohrstücks (14), wobei der Muffenkörper (12) oder das Spitzende (16) einen Dichtsitz (36) aufweist, wobei das Spitzende (16) oder der Muffenkörper (12) eine Aufnahme (56, 58) für mindestens einen an dem Dichtsitz (36) anliegenden Dichtring (52, 54) aufweist, wobei der Muffenkörper (12) eine Bajonettaufnahme (32) aufweist, mit welcher ein das Spitzende (16) umfassender Bajonettring (34) in Eingriff steht und wobei das Spitzende (16) an dem Bajonettring (34) gegen ein Bewegen aus dem Muffenkörper (12) heraus abgestützt ist, wobei der Bajonettring (34) in seiner Haltestellung in dem Muffenkörper (12) durch einen Blockierkörper (152) drehfest blockiert ist,
**dadurch gekennzeichnet, dass** sich das Spitzende (16) mit mindestens einem Stützkörper (74) an dem Bajonettring (34) abstützt.

2. Muffenverbindung nach Anspruch 1, **dadurch gekennzeichnet, dass** der Bajonettring (34) in einer Lösestellung mit seinen Bajonettkörpern (132, 134) in die Bajonettaufnahme (32) des Muffenkörpers (12) einsetzbar ist und durch Drehen in der Bajonettaufnahme (32) um eine Mittelachse (38) des Muffenkörpers (12) in der Bajonettaufnahme (32) in eine Haltestellung bewegbar ist, in welcher der Bajonettring (34) mit seinen Bajonettkörpern (132, 134) gegen eine Bewegung parallel zur Mittelachse der Bajonettaufnahme (32) festgelegt ist.

3. Muffenverbindung nach Anspruch 1 oder 2, **dadurch gekennzeichnet, dass** die Bajonettaufnahme (32) des Muffenkörpers (12) zwischen einer Einstecköffnung (22) des Muffenkörpers (12) und dem Dichtsitz (36) oder dem mindestens einen Dichtring (52, 54) am Muffenkörper (12) angeordnet ist.

4. Muffenverbindung nach einem der voranstehenden Ansprüche, **dadurch gekennzeichnet, dass** der Dichtsitz (36) oder der mindestens eine Dichtring (52, 54) zwischen der Bajonettaufnahme (32) und einer von einem den Muffenkörper (12) tragenden Basiselement (18) in den Muffenkörper (12) führenden Verbindungsöffnung (46) liegt.

5. Muffenverbindung nach einem der voranstehenden Ansprüche, **dadurch gekennzeichnet, dass** der Dichtsitz (36) und der mindestens eine Dichtring (52, 54) koaxial zu einer Mittelachse (38) des Muffenkörpers (12) angeordnet sind und dass insbesondere der Dichtsitz (36) als zur Mittelachse (38) des Muffenkörpers (12) zylindrische Fläche (42) ausgebildet ist.

6. Muffenverbindung nach einem der voranstehenden Ansprüche, **dadurch gekennzeichnet, dass** der Dichtsitz (36) in dem Muffenkörper (12) und der mindestens eine Dichtring (52, 54) an dem Spitzende (16) angeordnet ist.

7. Muffenverbindung nach einem der voranstehenden Ansprüche, **dadurch gekennzeichnet, dass** der Bajonettring (34) auf einer einer Stirnfläche (62) des Spitzendes (16) abgewandten Seite des Dichtsitzes oder des mindestens einen Dichtrings (52, 54) am Spitzende (16) angeordnet ist.

8. Muffenverbindung nach einem der voranstehenden Ansprüche, **dadurch gekennzeichnet, dass** der Bajonettring (34) auf einer dem Dichtsitz (36) oder dem mindestens einen Dichtring (52, 54) abgewandten Seite des Stützkörpers (74) angeordnet ist.

9. Muffenverbindung nach Anspruch 8, **dadurch gekennzeichnet, dass** das Spitzende (16) als Stützkörper einen Haltering (74) trägt, mit dem sich dieser an dem Bajonettring (34) abstützt, dass insbesondere der Haltering (74) formschlüssig in einer Halteaufnahme (72) an dem Spitzende (16) gehalten ist.

10. Muffenverbindung nach Anspruch 9, **dadurch gekennzeichnet, dass** der Haltering (74) an einer Umfangstelle eine Formschlussverbindung (92) aufweist, die zum radialen Aufweiten des Halterings (74) lösbar ist und dass insbesondere der aufgeweitete Haltering (74) in die Halteaufnahme (72) des Spitzendes (16) einsetzbar ist und nach Herstellen der Formschlussverbindung in der Halteaufnahme (72) gegen eine Bewegung in Richtung der Mittelachse (38) relativ zum Spitzende (16) fixiert ist.

11. Muffenverbindung nach einem der voranstehenden Ansprüche, **dadurch gekennzeichnet, dass** der Bajonettring (34) mit einem Ringkörper (112) das Spitzende (16) umschließt, dass insbesondere der Ringkörper (112) relativ zu dem Spitzende (16) drehbar ist.

12. Muffenverbindung nach Anspruch 11, **dadurch gekennzeichnet, dass** der Ringkörper (112) des Bajonettrings (34) einen Flanschkörper (122) des Bajonettrings (34) trägt, dass insbesondere der Ringkörper (112) und der Flanschkörper (122) einstückig miteinander verbunden sind.

13. Muffenverbindung nach Anspruch 12, **dadurch gekennzeichnet, dass** der Flanschkörper (122) in Richtung der Mittelachse (38) außerhalb des Muffenkörpers (12) angeordnet ist, dass insbesondere der Flanschkörper (122) die Einstecköffnung (22) des Muffenkörpers (12) überdeckend angeordnet ist, dass insbesondere der Flanschkörper (122) eine die Einstecköffnung (22) umschließende Stirnseite (124) des Muffenkörpers (12) übergreifend angeordnet ist.

14. Muffenverbindung nach einem der voranstehenden Ansprüche, **dadurch gekennzeichnet, dass** der Blockierkörper (152) an dem Bajonettring (34) parallel zur Mittelachse (38) bewegbar geführt ist, und dass insbesondere der Blockierkörper (152) zur drehfesten Festlegung des Bajonettrings (34) in eine Aussparung (136) im Muffenkörper (12) eingreift.

## Claims

1. Socket joint between a socket member (12) and a tip end (16) of a pipe piece (14), wherein the socket member (12) or the tip end (16) has a sealing seat (36), wherein the tip end (16) or the socket member (12) has a receiving member (56, 58) for at least one sealing ring (52, 54) which abuts the sealing seat (36), wherein the socket member (12) has a bayonet receiving member (32) with which a bayonet ring (34) which comprises the tip end (16) is in engagement and wherein the tip end (16) is supported on the bayonet ring (34) against a movement out of the socket member (12), wherein the bayonet ring (34) is blocked in a rotationally secure manner in the retention position thereof in the socket member (12) by means of a blocking member (152), **characterised in that** the tip end (16) is supported with at least one support member (74) on the bayonet ring (34).

2. Socket joint according to claim 1, **characterised in that** the bayonet ring (34) can be inserted in a release position with the bayonet members (132, 134) thereof into the bayonet receiving member (32) of the socket member (12) and can be moved by means of rotation in the bayonet receiving member (32) about a centre axis (38) of the socket member (12) in the bayonet receiving member (32) into a retention position, in which the bayonet ring (34) is secured with the bayonet members (132, 134) thereof against a movement parallel with the centre axis of the bayonet receiving member (32).

3. Socket joint according to claim 1 or 2, **characterised in that** the bayonet receiving member (32) of the socket member (12) is arranged between an insertion opening (22) of the socket member (12) and the sealing seat (36) or the at least one sealing ring (52, 54) on the socket member (12).

4. Socket joint according to any one of the preceding claims, **characterised in that** the sealing seat (36) or the at least one sealing ring (52, 54) is located between the bayonet receiving member (32) and a connection opening (46) which leads from a base element (18) which carries the socket member (12) into the socket member (12).

5. Socket joint according to any one of the preceding claims, **characterised in that** the sealing seat (36) and the at least one sealing ring (52, 54) are arranged coaxially relative to a centre axis (38) of the socket member (12) and **in that** in particular the sealing seat (36) is constructed as a face (42) which is cylindrical with respect to the centre axis (38) of the socket member (12).

6. Socket joint according to any one of the preceding claims, **characterised in that** the sealing seat (36) is arranged in the socket member (12) and the at least one sealing ring (52, 54) is arranged at the tip end (16).

7. Socket joint according to any one of the preceding claims, **characterised in that** the bayonet ring (34) is arranged at a side of the sealing seat facing away from an end face (62) of the tip end (16) or of the at least one sealing ring (52, 54) at the tip end (16).

8. Socket joint according to any one of the preceding claims, **characterised in that** the bayonet ring (34) is arranged at a side of the support member (74) facing away from the sealing seat (36) or the at least one sealing ring (52, 54).

9. Socket joint according to claim 8, **characterised in that** the tip end (16) carries as a support member a retention ring (74) by means of which it is supported on the bayonet ring (34), **in that** in particular the retention ring (74) is retained in a positive-locking manner in a retention receiving member (72) on the tip end (16).

10. Socket joint according to claim 9, **characterised in that** the retention ring (74) has at a peripheral location a positive-locking connection (92) which can be released in order to radially expand the retention ring (74) and **in that** in particular the expanded retention ring (74) can be inserted into the retention receiving member (72) of the tip end (16) and after the positive-locking connection has been produced is fixed in the retention receiving member (72) against a movement in the direction of the centre axis (38) relative to the tip end (16).

11. Socket joint according to any one of the preceding claims, **characterised in that** the bayonet ring (34) surrounds the tip end (16) with a ring member (112), **in that** in particular the ring member (112) can be rotated relative to the tip end (16).

12. Socket joint according to claim 11, **characterised in that** the ring member (112) of the bayonet ring (34) carries a flange member (122) of the bayonet ring (34), **in that** in particular the ring member (112) and the flange member (122) are connected to each other in an integral manner.

13. Socket joint according to claim 12, **characterised in that** the flange member (122) is arranged in the direction of the centre axis (38) outside the socket member (12), **in that** in particular the flange member (122) is arranged so as to cover the insertion opening (22) of the socket member (12), **in that** in particular the flange member (122) is arranged so as to engage over an end face (124) of the socket member (12) surrounding the insertion opening (22).

14. Socket joint according to any one of the preceding claims, **characterised in that** the blocking member (152) is guided so as to be able to be moved on the bayonet ring (34) parallel with the centre axis (38), and **in that** in particular the blocking member (152) engages in a recess (136) in the socket member (12) for rotationally secure fixing of the bayonet ring (34).

## Revendications

1. Liaison par manchon entre un corps de manchon (12) et une extrémité mâle (16) d'une section de tube (14), dans lequel le corps de manchon (12) ou l'extrémité mâle (16) comprend un siège d'étanchéité (36), dans lequel l'extrémité mâle (16) ou le corps de manchon (12) comprend un logement (56, 58) pour au moins une bague d'étanchéité (52, 54) s'appuyant contre le siège d'étanchéité (36), dans lequel le corps de manchon (12) comprend un logement à baïonnette (32) avec lequel une bague à baïonnette (34) entourant l'extrémité mâle (16) est emboîtée et dans lequel l'extrémité mâle (16) est appuyée contre la bague à baïonnette (34) afin d'empêcher un déplacement hors du corps de manchon (12),
dans lequel la bague à baïonnette (34) est bloquée, dans sa position de maintien dans le corps de manchon (12), de manière anti-rotative par un corps de blocage (152),
**caractérisée en ce que** l'extrémité mâle (16) s'appuie contre la bague à baïonnette (34) avec au moins un corps d'appui (74).

2. Liaison par manchon selon la revendication 1, **caractérisée en ce que** la bague à baïonnette (34) peut être insérée, dans une position de détachement, avec ses corps de baïonnette (132, 134), dans le logement à baïonnette (32) du corps de manchon (12) et peut être déplacée, par la rotation dans le logement à baïonnette (32) autour d'un axe central (38) du corps de manchon (12) dans le logement à baïonnette (32), vers une position de maintien, dans laquelle la bague à baïonnette (34) avec ses corps de baïonnette (132, 134) est fixée contre un déplacement parallèlement à l'axe central du logement à baïonnette (32).

3. Liaison par manchon selon la revendication 1 ou 2, **caractérisée en ce que** le logement à baïonnette (32) du corps de manchon (12) est disposé entre l'ouverture d'enfichage (22) du corps de manchon (12) et le siège d'étanchéité (36) ou l'au moins une bague d'étanchéité (52, 54) sur le corps de manchon (12).

4. Liaison par manchon selon l'une des revendications précédentes, **caractérisée en ce que** le siège d'étanchéité (36) ou l'au moins une bague d'étanchéité (52, 54) se trouve entre le logement à baïonnette (32) et une ouverture de liaison (46) conduisant d'un élément de base (18) supportant le corps de manchon (12) vers le corps de manchon (12).

5. Liaison par manchon selon l'une des revendications précédentes, **caractérisée en ce que** le siège d'étanchéité (36) et l'au moins une bague d'étanchéité (52, 54) sont disposés de manière coaxiale par rapport à un axe central (38) du corps de manchon (12) et **en ce que**, plus particulièrement, le siège d'étanchéité (36) est conçu comme une surface cylindrique (42) par rapport à l'axe central (38) du corps de manchon (12).

6. Liaison par manchon selon l'une des revendications précédentes, **caractérisée en ce que** le siège d'étanchéité (36) est disposé dans le corps de manchon (12) l'au moins une bague d'étanchéité (52, 54) est disposée sur l'extrémité mâle (16).

7. Liaison par manchon selon l'une des revendications précédentes, **caractérisée en ce que** la bague à baïonnette (34) est disposée sur un côté, opposé à une surface frontale (62) de l'extrémité mâle (16), du siège d'étanchéité ou de l'au moins une bague d'étanchéité (52, 54) sur l'extrémité mâle (16).

8. Liaison par manchon selon l'une des revendications précédentes, **caractérisée en ce que** la bague à baïonnette (34) est disposée sur un côté, opposé au siège d'étanchéité (36) ou à l'au moins une bague d'étanchéité (52, 54), du corps d'appui (74).

9. Liaison par manchon selon la revendication 8, **caractérisée en ce que** l'extrémité mâle (16) supporte, en tant que corps d'appui, une bague de maintien (74), avec laquelle il s'appuie contre la bague à baïonnette (34), plus particulièrement **en ce que** la bague de maintien (74) est maintenue par complémentarité de forme dans un logement de maintien (72) sur l'extrémité mâle (16).

10. Liaison par manchon selon la revendication 9, **caractérisée en ce que** la bague de maintien (74) comprend, sur un point de sa circonférence, une liaison par complémentarité de forme (92), qui peut être détachée pour l'élargissement radial de la bague de maintien (74) et **en ce que**, plus particulièrement, la bague de maintien (74) élargie peut être insérée dans le logement de maintien (72) de l'extrémité mâle (16) et, après l'établissement de la liaison par complémentarité de forme, est fixée dans le logement de maintien (72) afin d'empêcher un déplacement dans la direction de l'axe central (38) par rapport à l'extrémité mâle (16).

11. Liaison par manchon selon l'une des revendications précédentes, **caractérisée en ce que** la bague à baïonnette (34) entoure l'extrémité mâle (16) avec un corps annulaire (112), plus particulièrement **en ce que** le corps annulaire (112) peut tourner par rapport à l'extrémité mâle (16).

12. Liaison par manchon selon la revendication 11, **caractérisée en ce que** le corps annulaire (112) de la bague à baïonnette (34) supporte un corps de bride (122) de la bague à baïonnette (34), plus particulièrement **en ce que** le corps annulaire (112) et le corps de bride (122) sont reliés entre eux d'une seule pièce.

13. Liaison par manchon selon la revendication 12, **caractérisée en ce que** le corps de bride (122) est disposé dans la direction de l'axe central (38) hors du corps de manchon (12), plus particulièrement **en ce que** le corps de bride (122) est disposé de façon à recouvrir l'ouverture d'enfichage (22) du corps de manchon (12), plus particulièrement **en ce que** le corps de bride (122) est disposé de façon à englober un côté frontal (124) du corps de manchon (12) entourant l'ouverture d'enfichage (22).

14. Liaison par manchon selon l'une des revendications précédentes, **caractérisée en ce que** le corps de blocage (152) est guidé de manière mobile sur la bague à baïonnette (34) parallèlement à l'axe central (38) et plus particulièrement **en ce que** le corps de blocage (152) s'emboîte, pour la fixation anti-rotative de la bague à baïonnette (34) dans un évidement (136) dans le corps de manchon (12).
